# EUROPEAN PATENT APPLICATION

(11) **EP 3 345 788 A1**
(43) Date of publication of application: **11.07.2018**
(21) Application number: 17150809.6
(22) Date of filing: 10.01.2017
(51) Int. Cl.: B60P 3/39, E04H 15/06

(54) **SLEEPING ACCOMMODATION**

(71) Applicant: McDonald, Nicholas John, Plymouth, Devon PL8 2LY (GB); Jones, David John, Plymouth, Devon PL2 1LP (GB); Thomson, Ernest Bruce Robert, Kingsbridge, Devon TQ7 4HA (GB)
(72) Inventor: McDonald, Nicholas John, Plymouth, Devon PL8 2LY (GB); Jones, David John, Plymouth, Devon PL2 1LP (GB); Thomson, Ernest Bruce Robert, Kingsbridge, Devon TQ7 4HA (GB)
(74) Representative: Brown, Michael Stanley

(57) **Abstract**

Equipment affording sleeping accommodation comprises a frame (1), a bed base (2, 3) pivotally connected to the frame (1), a tent (9) connected to the frame (1) and to the bed base (2, 3), and jamming mechanisms (4, 5) for positioning the frame (1) within the rear of a vehicle (20) having an opening rear door.

## Description

### Field of the Invention

This invention relates to sleeping accommodation and is concerned with the provision of improved sleeping accommodation for use with a motor vehicle having an opening rear door.

There have been a number of proposals for providing such accommodation. For example, Patent Specification No. WO 97/23365 relates to a tent structure pivotally connected to the rear of a motor vehicle, but with a substantial part of the base within the vehicle.

US Patent Specification No. 4,192,543 discloses a van camper having door panels in the side and rear walls of the van that are outwardly and downwardly pivotable to provide bed platforms over which canvas canopies can be fitted.

It is an object of the present invention to provide improved means for the provision of sleeping accommodation.

It is a more specific object of the present invention to provide improved means for the provision of sleeping accommodation that can be installed in a van without any need whatsoever for any permanent fixings being installed in the van body.

### Summary of the Invention

According to the present invention there is provided equipment affording sleeping accommodation as claimed in Claim 1.

The equipment is such that it requires no support from the ground and no alterations to the body of the vehicle.

The bed base preferably comprises two portions hingedly connected to one another with the axis of the hinge connection parallel to the axis about which the bed base pivots relative to the frame.

The jamming mechanisms may be fitted between the top of the frame and the top of the structure of the vehicle and a rubber pad may fitted between the bottom of the frame and the bottom of the structure of the vehicle.

A bottom screw jamming mechanism may alternatively be utilised.

The method of positioning the two portions of the bed base within the frame may alternatively be reversed.

Tension straps are preferably provided acting between the top of the frame and the sides of the bed base.

### Brief Description of the Drawings

Figure 1 is an isometric view of one embodiment of the equipment in its folded or storage condition,
Figure 2 is a vertical cross-sectional view of the equipment shown in Figure 1, and
Figure 3 is an isometric view of the equipment in its opened condition,
Figure 4 is a view of the rear of a van with the equipment installed,
Figures 5 and 6 are detail views of the upper jamming mechanism,
Figures 7 and 8 are detail views of the lower jamming mechanism,
Figure 9 is a plan view showing the hinge locations,
Figure 10 shows the operation of the hinges,
Figure 11 is a side view of a van with the equipment installed and in a closed condition,
Figure 12 is a side view of the van with the equipment partially open,
Figure 13 is a side view of the van with the equipment fully open,
Figure 14 shows a frame and bed base made from metal tube in its storage condition,
Figure 15 shows the structure of Figure 14 in its deployed condition,
Figure 16 is a view of the rear of a van with the equipment of Figures 14 and 15 installed,
Figure 17 is a detail view of the upper jamming mechanism,
Figure 17a is a detail view of an alternative ratchet-type upper jamming mechanism consisting of a horizontal arm which is attached to a vertical element of the frame,
Figure 17b is a detail view of an alternative screw-type bottom jamming and height-adjusting mechanism,
Figure 18 is a plan view showing the hinge locations,
Figure 19 shows the operation of the hinges,
Figure 20 is a side view of the rear of a van with the equipment installed and in an open condition,
Figure 21 shows a further embodiment of the invention,
Figure 22 is a cross-sectional view of the rear of a van showing one form of jamming mechanism in more detail,
Figure 23 is a rear view of the equipment shown in Figure 22, and
Figures 24 and 25 are enlarged views of the jamming mechanism.

### Description of the Preferred Embodiments

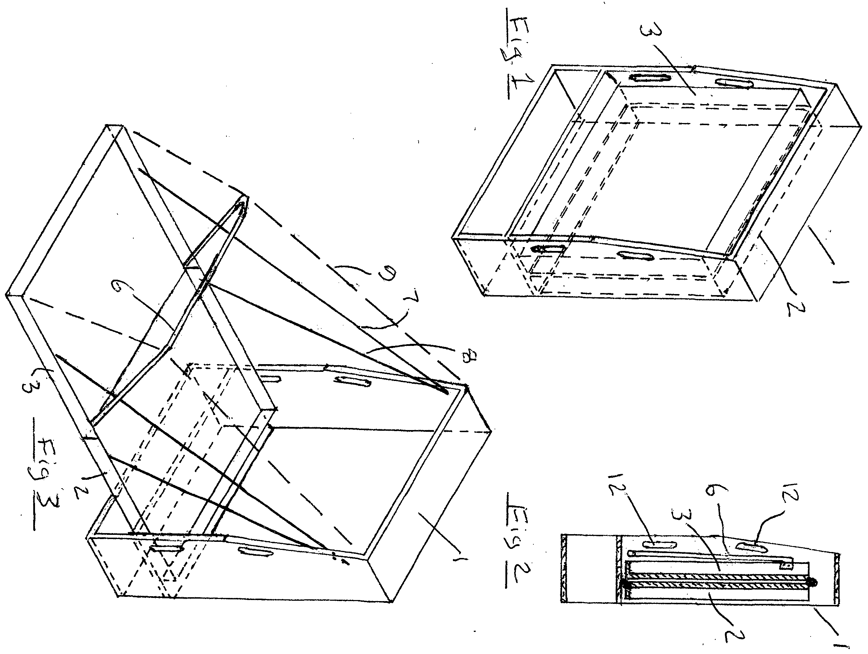

The apparatus shown in Figures 1 to 13 includes a rectangular frame 1 though, in an alternative arrangement, the frame is trapezoidal with the top and bottom elements of the trapezium parallel to the floor of the van 20. In a further alternative arrangement, there are four separate elements that lock together in situ to form the frame 1.

There is a bed base that includes a forward bed base section 2 and a rear bed base section 3. The forward bed base section 2 is pivotally connected to the lower horizontal section of the frame 1 by hinges 11 so arranged that the axis of pivotal movement of the forward bed base section 2 relative to the van 20 is parallel to the axles of the van 20. The rear bed base section 3 is pivotally connected to the forward bed base section 2 by hinges 12, the axes of which are parallel to the axes of hinges 11.

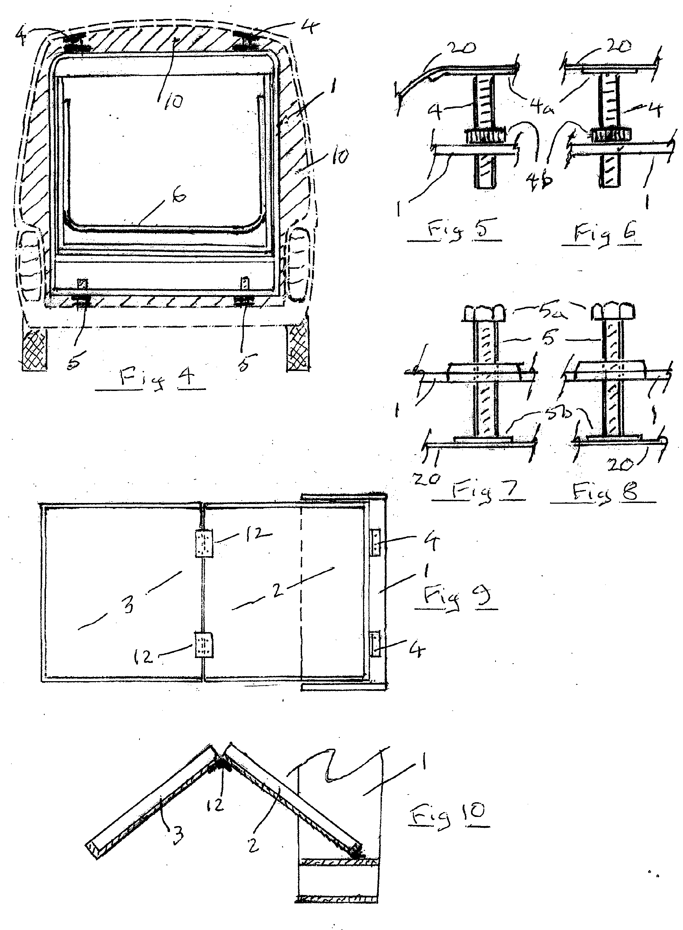

As shown in Figs. 4, 5 and 6, upper jamming mechanisms 4 are positioned above the top member of the frame 1 and have shaped heads that are curved at their rear ends in a downward direction so that the upper jamming mechanisms 4 can be jammed securely between the top of the frame 1 and the corner between the opening for the van rear door and the roof of the van 20.

As shown in Figs. 4, 7 and 8, lower jamming mechanisms 5 are placed between the lower surface of the frame 1 and the upper surface of the floor of the van 20. The arrangement is such that, once all the jamming mechanisms 4 and 5 have been wedged securely in the required positions, the frame 1 is rigidly fixed in place within the interior of the van 20.

Tension straps 7 extend between the tops of the sides of the frame 1 and points spaced, for example, approximately 350 mm. from the ends of the sides of the rear bed base section 3. Tension straps 8 are also attached to the tops of the sides of the frame 1 and to the forward bed base section 2 at positions again spaced for example, approximately 350 mm. from the axes of the hinges 12.

The equipment also includes a generally U-shaped hoop 6, the ends of the limbs of which are pivotally connected to the sides of the rear bed base 3 adjacent the hinge connection between the two halves of the bed base. The top horizontal section of the hoop is attached to the inside of a tent 9 within pockets or by means of loops attached to the tent 9. The tent 9 is formed of flexible waterproof fabric material with air vents (not shown) and, after deployment of the tent 9, waterproof material 10 closes the peripheral gap between the van opening and the frame 1. The waterproof material 10 is put in place after erection of the frame 1 within the vehicle and remains in place until the equipment is removed from the vehicle for storage.

The tent 9 is fixed to the sides and to the top of the frame 1, to the upstands on the bed bases 2 and 3 and to the rear of the base 3 by any appropriate means.

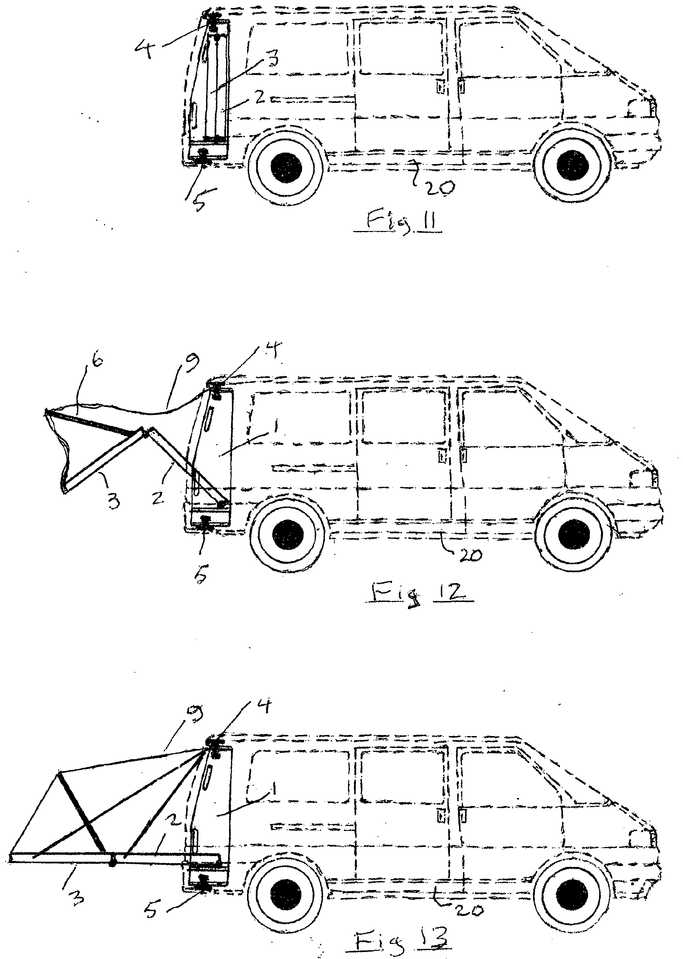

Deployment of the equipment is effected as illustrated in Figures 11 to 13 by pulling out the rear of the rear bed base 3 to obtain a stable supporting structure. No ground support is required and no alterations to the vehicle body are required. Mattresses can be affixed to each of the bed bases 2 and 3.

The equipment can be folded back into the vehicle by reversing the opening procedure. Thus, bases 2 and 3 and the tent 9 are folded to their storage positions inside the frame and, once the frame 1 is back in its upright position, the rear door of the vehicle can then be closed.

If it is desired to remove the equipment from within the vehicle, the jamming mechanisms 4 and 5 are released so that the whole of the equipment can be lifted out of the vehicle, lifting being facilitated by the handholds that form part of the sides of the frame 1. If desired, the equipment can be stored within the vehicle as it can be placed along one side of the vehicle and will occupy relatively little space. If desired, a storage mechanism (not shown) may be provided to enable the closed equipment to be carried on the roof of the vehicle.

The waterproof material 10 can be produced by cutting pieces of foam which are profiled to fit in the gap between the frame 1 and the door opening, the pieces of foam being coated with plastic material for improved durability. The pieces of foam are compressed to ensure effective sealing of the gap between the vehicle door seal and the sides of the frame 1.

In an alternative arrangement, a collar of waterproof material is attached to the rear surfaces of the sides and the top of the frame 1, this collar being tailored to cover the gap between the frame 1 and the top and sides of the van. One or more magnetic strips are then affixed to the outer edge of the collar to enable it to be attached releasably to the top and sides of the rear opening of the vehicle.

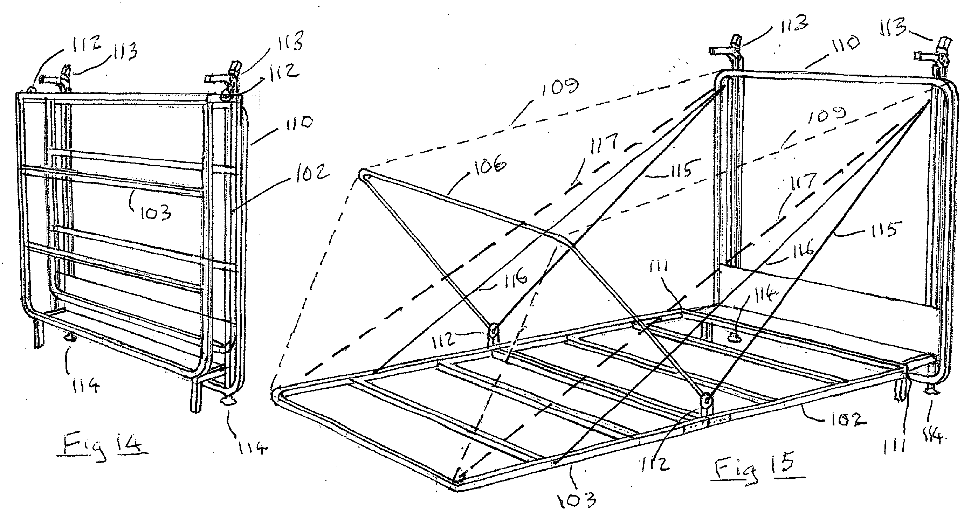

The apparatus shown in Figures 14 to 20 includes a rectangular frame 110 though, in an alternative arrangement, the frame is trapezoidal with the top and bottom elements of the trapezium parallel to the floor of the van 120. In a further alternative arrangement, there are four separate elements that lock together in situ to form the frame 110.

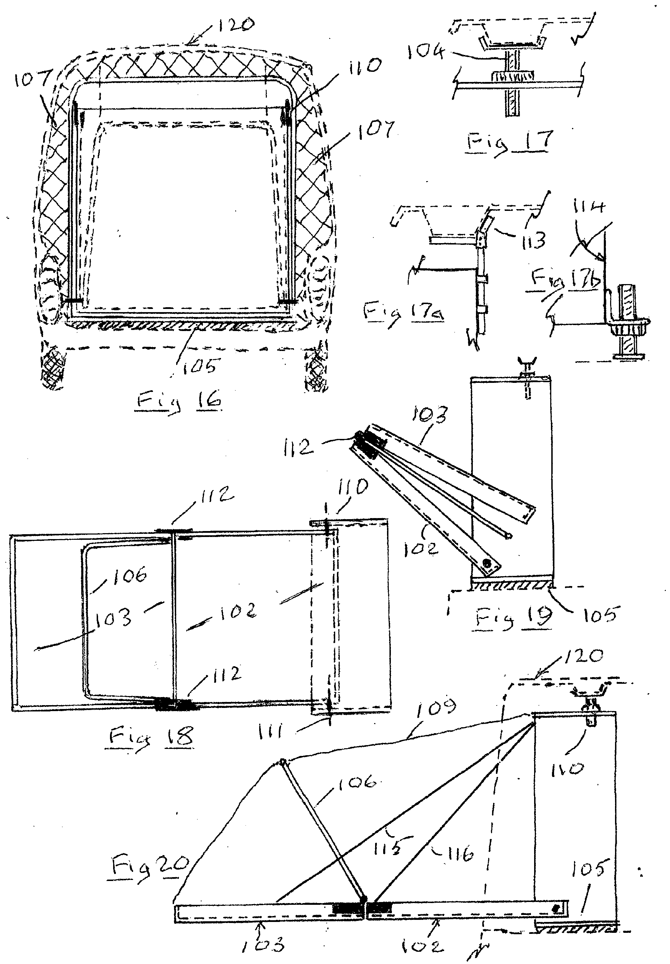

There is a bed base that includes a forward bed base section 102 and a rear bed base section 103. The forward bed base section 102 is pivotally connected to the lower horizontal section of the frame 110 by hinges 111 so arranged that the axis of pivotal movement of the forward bed base section 102 relative to the van 120 is parallel to the axles of the van 120. The rear bed base section 103 is pivotally connected to the forward bed base section 102 by hinges 112, the axes of which are parallel to the axes of hinges 111. As can be seen from Figure 19, the arrangement is such that, when the bed base is tilted out of its initial vertical storage condition, the rear bed base section 103 is located above the forward bed base section 102 and the mattress (not shown) will be disposed between the two base sections 102 and 103 so that, when the bed base is in its fully open position (as shown in Figure 20), the mattress will be on top of the two bed base sections 102 and 103.

As shown in Figures 17 and 17a, jamming mechanisms 104 and 113 are positioned above the top member of the frame 110 and have shaped heads that are curved at their rear ends in a downward direction so that the horizontal jamming mechanisms 104, 113 can be jammed securely between the top of the frame 110 and the corner between the opening for the van rear door and the roof of the van 120. A rubber pad 105 or a bottom jamming mechanism 114 is placed between the lower surface of the frame 110 and the upper surface of the floor of the van 120. The arrangement is such that, once all the jamming mechanisms 104, 113, 114 that are used have been wedged securely in the required positions, the frame 110 is securely fixed in place within the interior of the van 120.

Tension straps 115, 116 extend between the tops of the sides of the frame 110 and points located within approximately 350 mm. from the ends of the centres of the sides of the rear bed base section 103 and within 300 mm. from the hinge between the bed sections 102 and 103 towards the frame 110. Alternatively, a single strap 117 (Figure 15) is attached to the rear of the base 103. The tension straps 115, 116, 117 are attached close to the sides at the top of the frame 110 and to the forward bed base section 102 at positions again spaced within approximately 350 mm. from the axes of the hinges 112.

The equipment also includes a generally U-shaped hoop 106 the ends of the limbs of which are pivotally connected to the sides of the bed bases at the central hinge between them or within 300 mm of the hinge, either forwards or rearwards. The top horizontal section of the hoop 106 is attached to the inside of a tent 109 within pockets or by means of loops attached to the tent 109. The hoop 106 may also be held in position by the tent fabric which, when fully deployed, does not allow movement of the U-shaped hoop 106 from the position shown in Figure 20.

The tent 109 is formed of flexible waterproof fabric material and, after deployment of the tent 109, waterproof material 107 closes the peripheral gap between the van opening and the frame 110. The waterproof material 107 is put in place after erection of the frame within the vehicle and remains in place until the equipment is removed from the vehicle for storage.

The tent 109 is fixed to the sides and to the top of the frame 110, to the sides of the bed bases 102 and 103 and to the rear of the base 103 by any appropriate means.

Deployment of the equipment is effected as illustrated in the drawings by pulling out the two bed bases 102 and 103 from the storage position into the partially deployed condition shown in Figure 19 into the fully deployed condition shown in Figure 20 to obtain a stable supporting structure. No ground support is required and no alterations to the vehicle body are required. Mattresses can be affixed to each of the bed bases 102 and 103 and will be located between the two bed bases 102 and 103 when they are in the storage condition so that, when the two bed bases 102 and 103 are in the fully deployed condition, the mattresses when automatically be positioned on top of the bed bases 102 and 103.

The equipment can be folded back into the vehicle by reversing the opening procedure. Thus, bases 102 and 103 and the tent 109 are folded to their storage positions inside the frame 110 so that the rear door of the vehicle can then be closed.

If it is desired to remove the equipment from within the vehicle, the jamming mechanisms 104 or 113 and/or 114 are released so that the whole of the equipment can be lifted out of the vehicle, with lifting being facilitated by the provision of handholds that form part of the sides of the frame 110. If desired, the equipment can be stored within the vehicle as it can be placed along one side of the vehicle and will occupy relatively little space.

As shown in Figures 14 and 15, the bed bases 102 and 103 and the frame 110 may be formed from square metal tube.

A tie (not shown) may be provided on each side of the frame 110 at or near to the base between the rubber pad 105 and the frame 110 to assist in supporting the horizontal load at the base of the frame 110. If desired similar ties (again not shown) may be provided at or near the top of the frame 110 to make installation easier by holding the frame 110 to the van door opening.

If desired, a storage device (not shown) may be provided to enable the closed equipment to be carried on the roof of the vehicle.

In an alternative arrangement, a collar 107 of waterproof material is attached in a position within 300 mm. from the rear of the frame 110 to the sides and top of the fabric of the tent 109. The collar 107 is tailored to cover the gap between the tent 109 and beyond the rubber seal which is fitted to the van 120 between the door and the van body. The collar 107 is fitted with magnets sewn into its perimeter which attach, by magnetic force, to the steel surface of the van 120. The same method of attachment may be used to fix the bottom of the tent 109 to the bed bases 102 and 103 if steel is used in, or placed into, the sides of the bed bases 102 and 103.

Figures 16 to 20 illustrate an arrangement in which the frame 110 and the bed bases 102 and 103 are constructed in plastic or wood or composite materials, whereas Figures 14 and 15 show an arrangement in which the frame 110 and the bed bases are constructed from metal tube. The invention is thus not limited to the use of any specific materials.

It is generally accepted that the load to be lifted by one person should normally be less than 25 kilograms and, in some countries, this is a legal requirement for some products and activities. The arrangement may accordingly be such that the hinges 111 are so made that the bed sections 102 and 103 can readily be uncoupled from the frame 110, subject to care in the design to eliminate excess weight.

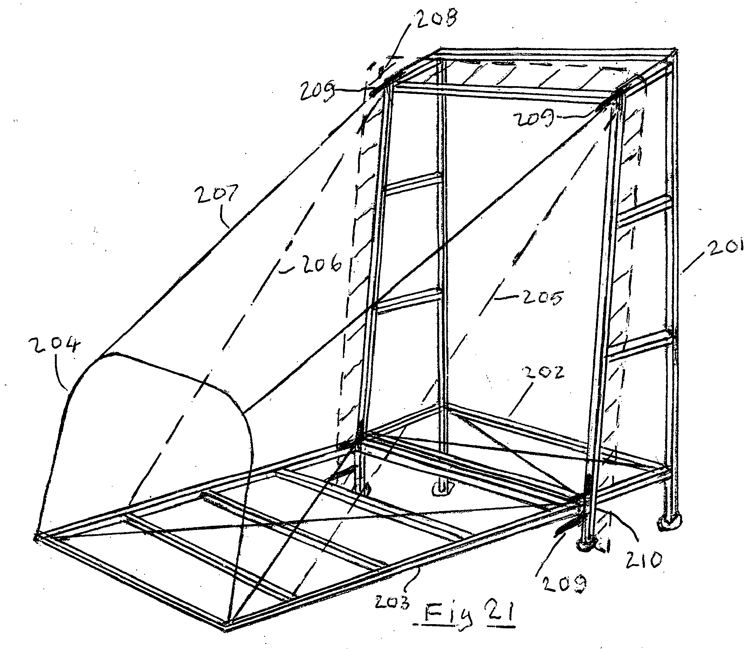

The apparatus shown in Figure 21 includes an upright frame 201 that is fitted within the rear of the vehicle and includes two spaced and interconnected generally upright structures. At the bottom of the frame 201 there is a fixed forward bed base section 202 which is hingedly connected by hinges 210 to a rear bed base section 203 which is thus pivotable about a generally horizontal axis relative to the frame 201.

There is a hoop 204 or a rigid end panel pivotally connected to the free end of the rear bed base section 203 and there are flexible support ties 205 and 206 extending between the top of the frame 201 and the rear bed base section 203 adjacent the end thereof remote from the frame 201 so that the rear bed base section 203 can be moved between its generally horizontal position, as shown in Figure 21 and a generally vertical position in which it is in engagement with the rear of the frame 201.

The top of the hoop 204 or rigid end panel is connected to the inside of a tent 207 which is formed of a flexible waterproof fabric material. The tent 207 is fixed to the sides and to the top of the frame 201 and to the sides of the rear bed base section 203. When the tent 207 is deployed, the peripheral gap between the vehicle opening and the frame 201 is closed by means of a collar 208 which may be made of any suitable material, for example, a resilient foamed plastic material. The collar 208 may be an integral part of the equipment and may remain in place until the equipment is removed from the vehicle for storage.

A flexible mattress (not shown) will be placed on top of the bed base sections 202 and 203 and will be folded up when the rear bed base section 203 is returned to its generally vertical storage position.

There are struts or ties 209 bolted or welded to the rear of the frame 201 and to the sides of the vehicle, thereby avoiding the need for jamming mechanisms. The arrangement shown in Figure 21 will thus be beneficial when there is no requirement for regular installation and removal of the equipment and where there is no advantage in eliminating any drilling or welding to the vehicle.

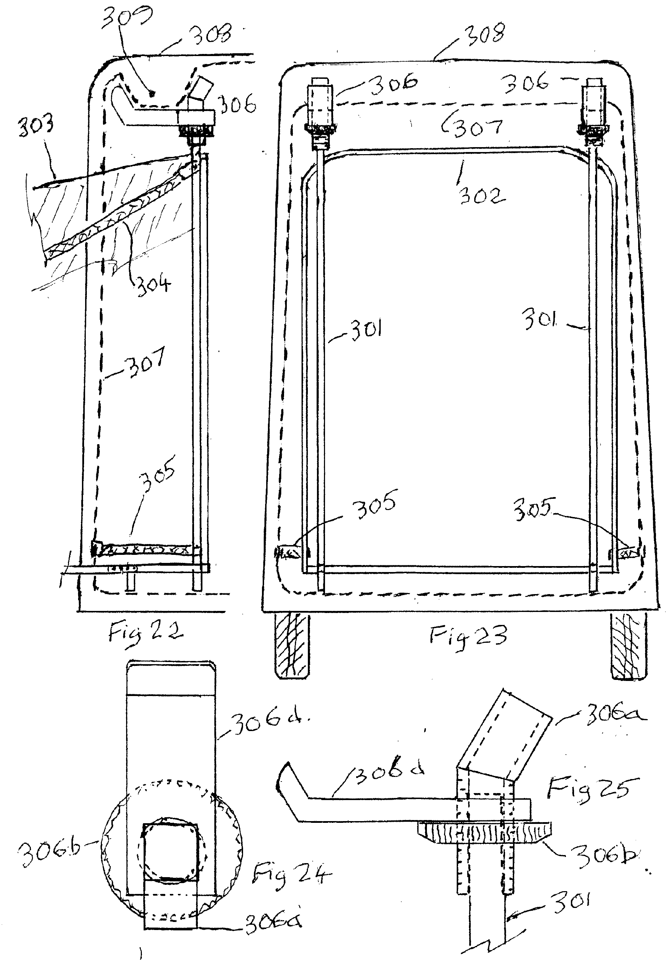

Turning next to Figures 22 to 25, these show the use of two jamming mechanisms 306 for holding the equipment totally securely in the rear of a van 308 having a door frame 309 and a rear door seal 307, The tent 303 is attached, at its forward end, to the frame 302 and to the bed base with the load transference via a tie 304. The horizontal element of the force in the tie 304 is transferred through the bottom of the bed base to the to the bottom of the frame 302 and is resisted by the frictional engagement between the feet of the frame 302 and the floor of the van 308 and, positively, through the straps 305 that are hooked over the van door seal 307.

Each jamming mechanism 306 comprises a threaded spigot 306a which fits over the top of a post 301. There is a handwheel 306b with an internal thread which fits over the spigot 306a and an inverted saddle-shaped load transfer member 309 resting on the upper surface of the handwheel 306b.

The equipment is placed in position in the rear of the van 308 with the handwheel 306b of each jamming mechanism 306 wound down to its lowest level. The frame 302 is moved into its fully upright position with the cranked end of each spigot 306a bearing against the door frame 309. The handwheel 306b is then rotated relative to the spigot 306a so that it moves upwardly relative to the spigot 306a taking with it the load transfer member 306d which is thus jammed securely against the door frame 309.

Alternative arrangements can also be made if it is desired that the rear of the load space of the vehicle be provided with an additional apparatus forming the front part of the bed base.

## Claims

1. Equipment affording sleeping accommodation comprising a frame, a bed base pivotally connected to the frame, and a tent connected to the frame and to the bed base, **characterised by** the provision of jamming mechanisms for positioning the frame within the rear of a vehicle having an opening rear door.

2. Equipment as claimed in claim 1, which is such that it requires no support from the ground and no alterations to the body of the vehicle.

3. Equipment as claimed in either of the preceding claims, in which, in use, the jamming mechanisms are fitted between the top and bottom of the frame on the one hand and the top and bottom of the structure of the vehicle on the other hand.

4. Equipment as claimed in any one of the preceding claims, in which the bed base comprises two portions hingedly connected to one another with the axis of the hinge connection parallel to the axis about which the bed base pivots relative to the frame.

5. Equipment as claimed in claim 1, in which a rubber pad is fitted between the bottom of the frame and the bottom of the structure of the vehicle.

6. Equipment as claimed in any one of the preceding claims, in which tension straps are provided acting between the top of the frame and the sides of the bed base.

7. Equipment as claimed in any one of the preceding claims, in which each jamming mechanism includes a handwheel which, on fitting of the equipment in the rear of a vehicle, can be rotated to move a load transfer member into firm engagement with part of the body of the vehicle.
